# EUROPÄISCHE PATENTSCHRIFT

(11) **EP 0 645 741 B1**
(45) Veröffentlichungstag und Bekanntmachung des Hinweises auf die Patenterteilung: **07.04.1999**
(21) Anmeldenummer: 94111368.0
(22) Anmeldetag: 21.07.1994
(51) Int. Cl.: G07D 13/00, G07D 1/00

(54) **Kassentresor für beidseits agierende Kassierer**
Cash-desk with two cashiers, operating at both sides
Guichet avec deux caissiers, opérant de part et d'autre

(30) Priorität: 23.09.1993 DE 9314342 U
(43) Veröffentlichungstag der Anmeldung: 29.03.1995
(73) Patentinhaber: ASCOM AUTELCA AG, 3073 Gümligen (CH)
(72) Erfinder: Zwahlen, Fritz, CH-3257 Ammerzwil (CH); Vonäsch, Hans, CH-3098 Köniz (CH)
(74) Vertreter: Roshardt, Werner Alfred, Dipl.-Phys.

(56) Entgegenhaltungen:
- EP-A- 0 157 012
- DE-A- 4 105 117
- GB-A- 2 026 220
- US-A- 4 188 148
- US-A- 4 820 909
- US-A- 4 854 452
- US-A- 5 062 598

## Beschreibung

Die Erfindung betrifft einen Kassentresor gemäß Patentanspruch 1.

Kassentresore werden in der US-A 5,062,598, der EP-A 0 157 012, der US-A 4,854,452 und der US-A 4,820,909 beschrieben. Die GB-A 2 026 220 beschreibt einen Kassentresor, der zudem noch von beidseits agierenden Kassierern bedienbar ist. Beidseits der Banknotenausgabeeinheit ist ein versenkbarer Schieber angeordnet, der in seinem hervorstehenden Zustand einen Zugriff zur Einheit für den jeweils benachbart stehenden Kassierer erschwert und diesen somit vom Zugriff auf die für den anderen Kassierer bestimmten Banknoten abhält.

Die Kassentresore werden in den Schalterhallen von Bankinstituten aufgestellt. Sie sind Geräte, in denen Geld unter großen Sicherheitsvorkehrungen abspeicherbar ist und aus denen Bankangestellte oder auch Bankkunden nach vorheriger Identifikation und oftmals unter Eingabe von Sicherheits-Codes einen Geldbetrag zur Ausgabe abrufen können. Die Kassentresore sind derart ausgebildet, daß bei einem Banküberfall nur ein äußerst geringer Betrag erbeutet werden kann. An die im Geldspeicher eingelagerte Geldmenge kann auch ein Bankräuber nicht innerhalb "nützlicher" Frist heran kommen. Der nachfolgend beschriebene Kassentresor ist derart ausgelegt, daß er zwei Kassierer (Bankangestellte) bedienen kann.

Ausgehend von den geforderten Sicherheitsvorkehrungen sind bekannte Kassentresore derart ausgelegt, daß Manipulationen und sei es auch nur zur Behebung eines kleinen mechanischen Defektes bei Publikumsverkehr, an ihnen nicht ausführbar sind, da bei Servicearbeiten die geforderten Sicherheitsanforderungen betreffend eingelagertem Geldbetrag nicht eingehalten werden konnten.

Die Erfindung löst die Aufgabe einen Kassentresor zu schaffen, der sich durch eine besondere Servicefreundlichkeit auszeichnet und bei dem die an sich schon seltenen Servicearbeiten an der Banknotenein-/ausgabeeinheit bereits in der Schalterhalle unter Sicherstellung gegen unbefugten Zugriff auf den im Geldspeicher abgespeicherten Geldbetrag vorgenommen werden können.

Durch eine klare konstruktive Trennung der Banknotenein-/ausgabeeinheit von der Tresorgrundeinheit ist es möglich, die nicht den Sicherheitsvorkehrungen unterliegende Vereinzelung und Bündelbildung der Banknoten hier zu vollziehen. Die Banknoten müssen dann nur noch einzeln vom oder in den Banknotenspeicher durch einen Durchbruch in der Wandung der Tresorgrundeinheit transportiert werden. Durch Justierelemente läßt sich die Banknotenein-/ausgabe- einheit zum Durchbruch mit einer ausreichenden Genauigkeit anordnen, wodurch eine einwandfreie Übergabe der Banknoten gewährleistet ist. Durch die gewählte Konstruktion der Justage ist die Banknotenein-/ausgabe von der Tresorgrundeinheit abnehmbar. Sollte nun z. B. ein eventueller Banknotenstau oder ein anderer Defekt sich ergeben, können somit Servicehandlungen ohne Sicherheitsrisiko jederzeit, auch bei Publikumsverkehr in der Schalterhalle, vorgenommen werden.

Der Kassentresor weist aufgrund seiner Panzerung, dem Raum für die zu speichernden Banknoten und die für den Betrieb notwendigen Baugruppen ein vorgegebenes minimal Volumen auf. Um diesen Kassentresor nun raumsparend im Schalterraum eines Bankinstituts unterzubringen, wurde die Banknotenein-/-ausgabeeinheit derart aufgebaut, daß alle für die Banknotenein- und -ausgabe notwendigen Baugruppen konzentriert in einem einzigen Teilbereich untergebracht wurden. Eine formschön gestaltete Abdeckung der Banknotenein-/-ausgabeeinheit wird nun zweiteilig ausgebildet, wobei der eine Teil obige Baugruppen abdeckt und der andere Teil nur die Abdeckungsform der ersten Abdeckung weiterführt. Der Kassentresor kann somit alleinstehend aufgestellt werden, oder teilweise unter den Banktresen untergeschoben verwendet werden, wobei dann hier der zweite Abdeckungsteil (Verkleidungsteil) abgenommen worden ist.

In bevorzugter Weise ist die Anordnung der Banknotenspeichereinheit derart in der Tresorgrundeinheit vorgenommen worden, daß sie herausziehbar ist. Hierzu wird die Banknotenspeichereinheit in der Tresorgrundeinheit auf Führungselementen, insbesondere auf Schienen bewegt. Die Verriegelung ist in der Tresorgrundeinheit derart ausgebildet, daß bei Entriegelung automatisch eine Stromlosschaltung der Banknotenspeichereinheit erfolgt und die elektrischen Kontakte beim Herausziehen selbsttätig entkuppelt werden. Die Steckverbindungen müssen somit nicht mehr separat per Hand durch Ver- bzw. Entkuppeln der Steckverbindungen gelöst bzw. geschlossen werden. Ein Ausreißen von Kabelverbindungen ist somit beim Herausziehen der Speichereinheit aus der Tresorgrundeinheit ausgeschlossen.

Besonderes Augenmerk wurde auf die leichte Zugänglichkeit zu den einzelnen Bauteilen des Kassentresors gerichtet, wobei jedoch bei Servicearbeiten an der den Banknotenspeicher beinhaltenden Tresorgrundeinheit Sicherheitsvorkehrungen gegen unbefugten Zugriff vorgenommen werden müssen. Die leichte Zugänglichkeit wird insbesondere durch eine einfach herzustellende Verbindung erreicht, welche sich bei allen senkrecht aufeinander zu befestigenden Blechen einsetzen läßt.

Durch die besondere Ausgestaltung einer Zugentlastung, insbesondere für die den Kassentresor verlassenden Versorgungs- und Signalkabel zu Eingabeterminals, zum Zentralrechner, etc. konnte die Servicefreundlichkeit sowie die Betriebssicherheit infolge einer einwandfreien Zugentlastung von Kabelmantel plus Abschirmung erhöht werden.

Im folgenden werden Ausführungsbeispiele des erfindungsgemäßen Kassentresors, der Verbindung und des Befestigungsmittels zur Zugentlastung für ein Kabelbündel anhand von Zeichnungen näher erläutert. Es zeigen:
- Fig. 1: einen Kassentresor in einem Schalterraum mit zwei Dateneingabeeinrichtungen für je einen Bankangestellten,
- Fig. 2: einen Längsschnitt durch eine Banknotenausgabeeinheit des Kassentresors,
- Fig. 3: eines schematischen Längsschnitts durch den Kassentresor,
- Fig. 4: einen Querschnitt durch ein Wegewahlelement des Kassentresors, um die Banknoten aus der Tresorgrundeinheit des Kassentresors in die Banknotenausgabeeinheit bzw. von einer Eingabeeinheit direkt zur Banknotenausgabeeinheit bei fehlerhaften Banknoten zu leiten,
- Fig. 5: eine schematische Seitenansicht eines aus der Tresorgrundeinheit herausgezogenen Banknotenspeichers als Geldspeichereinheit,
- Fig. 6: eine schematische Stirnansicht des in **Figur 3** dargestellten Banknotenspeichers, wobei hier die Banknotenein-/ausgabeeinheit abgenommen ist,
- Fig. 7: einen Längsschnitt durch eine lösbare Verbindung von aufeinander senkrecht stehenden Abdeck- bzw. Unterteilungsblechen, insbesondere des Kassentresors,
- Fig. 8: eine perspektivische Explosionszeichnung von Elementen der in **Figur 7** dargestellten Verbindung,
- Fig. 9: eine perspektivische Darstellung eines Befestigungsmittels zur Zugentlastung eines eine elektrische Verbindung mit der Peripherie herstellenden Kabelbündels des Kassentresors,
- Fig. 10: einen Querschnitt durch das in die Tresorwand der Tresorgrundeinheit eingebauten Befestigungsmittels und
- Fig. 11: eine Frontansicht auf das Befestigungsmittel von der Innenseite der Tresorgrundeinheit her.

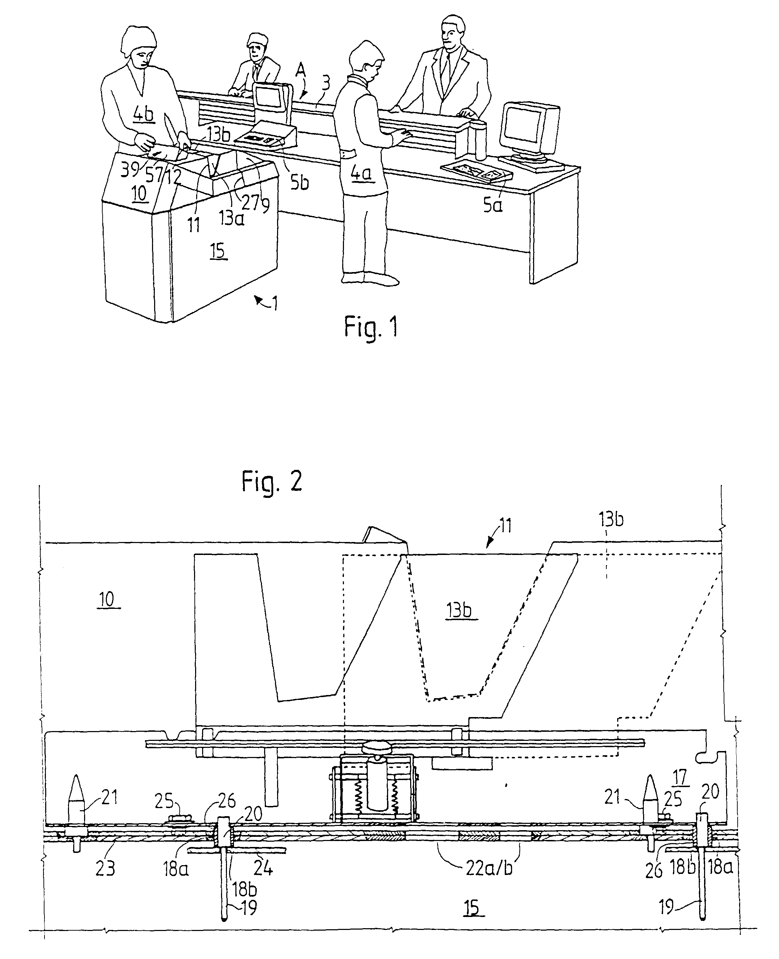

In **Figur 1** ist ein von zwei Bankangestellten **4a** und **4b** als Kassier zu bedienender Kassentresor **1** dargestellt. Der Kassentresor 1 ist durch einen Tresen **3** von den Bankkunden getrennt. Die beiden Bankangestellten **4a** und **4b** stehen rechts und links neben dem Kassentresor **1**. Jeder der beiden Bankangestellten **4a** und **4b** hat ein Terminal **5a** bzw. **5b** für die datenelektronische Bedienung des Kassentresors **1**, zur Durchführung von Abbuchungen, Banknotenaus- und -eingabe, etc.

Der Kassentresor **1** hat oben eine zu Servicezwecken abnehmbare Banknotenein-/ausgabeeinheit **10**, welche zusammen mit einem Verkleidungsteil **9** den oberen Teil des Kassentresors 1 bildet. Aus Platzersparnisgründen ist der Kassentresor 1 teilweise unter den Tresen 3 schiebbar, wobei dann der Verkleidungsteil **9**, der keine Funktionselemente enthält, abgenommen ist.

Auf der Oberseite der Banknotenein-/ausgabeeinheit **10** ist eine Ausgabeeinheit **11** und eine Eingabeeinheit **39** für Banknoten **12** angeordnet. Die Ausgabeeinheit **11** ist mit einer zweiteiligen Abdeckung **13a** und **13b** vollständig verschließbar. Die rechte Teilabdeckung **13a** ist von der linken **13b** unabhängig aufmachbar und schließbar. In **Figur 1** ist die rechte Abdeckung **13a** geschlossen und die linke Teilabdeckung **13b** geöffnet dargestellt. Der auf der linken Seite des Kassentresors **1** stehende Bankangestellte **4b** hat von oben links freien Zugriff zu dem in der Ausgabeeinheit **11** für die Ausgabe bereitgestellten Banknotenbündel **12**. Da die rechte Teilabdeckung **13a** der Ausgabeeinheit **11** geschlossen ist, hat der auf der rechten Seite des Kassentresors **1** stehende Bankangestellte **4a** keinen Zugriff in die Ausgabeeinheit **11** hinein.

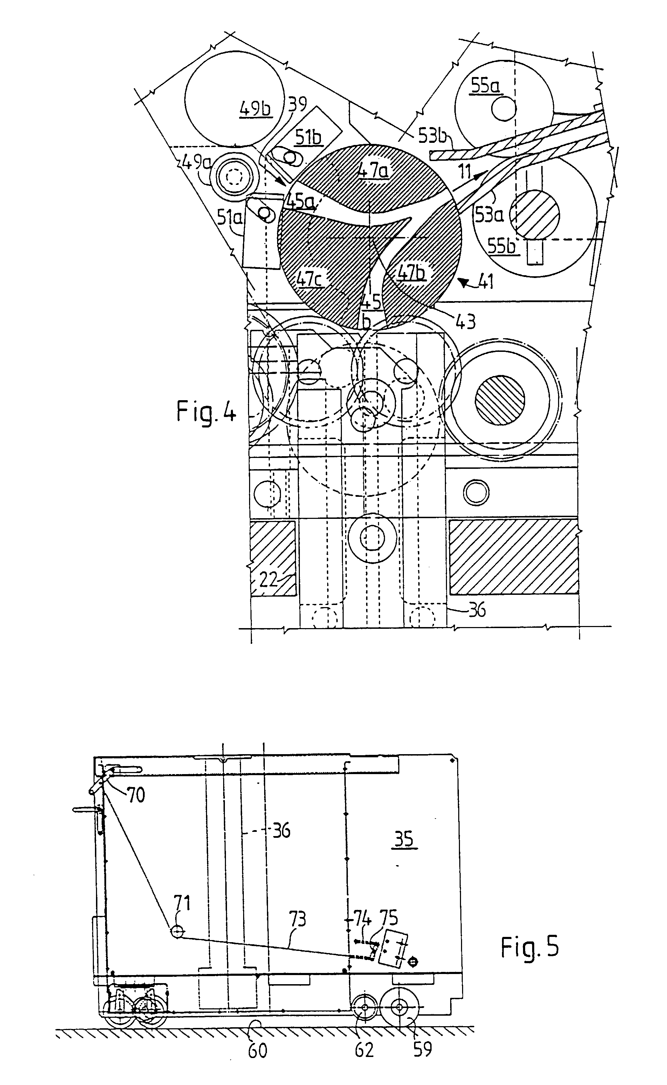

Die Ausgabeeinheit **11** ist aus ergonomischen Gründen als horizontal quer verlaufende trapezförmige Längsöffnung mit offenen Stirnseiten oben auf der Banknotenein-/ausgabeeinheit **10** ausgebildet. Die Abdeckung der Banknotenein-/ausgabeeinheit **10** sowie des Verkleidungsteils **9** reicht aus gestalterischen Gründen knapp über die Oberkante einer Tresorgrundeinheit **15**. In der Tresorgrundeinheit **15** ist eine in **Figur 3** angedeutete Geldspeichereinheit als Banknotenspeicher **35** angeordnet.

Die Banknotenein-/ausgabeeinheit **10** ist mittels einer in **Figur 2** dargestellten Halteeinheit 17 abnehmbar auf der Tresorgrundeinheit **15** gehalten. Der freie Abstand der Halteeinheit **17** von einer oberen Wandung **23** der Tresorgrundeinheit **15** richtet sich nach der Dicke dieser Wandung **23**. Diese Dicke kann je nach geforderten Sicherheitsauflagen des Bankinstitutes unterschiedlich sein. Aufgrund dieser unterschiedlichen Dicken muß der Abstand der Halteeinheit **17** von der Innenseite der Wandung **23** bzw. von einer zur Innenseite in einem wohl definierten Abstand angeordneten Referenzplatte **24** bei der Montage des Kassentresors **1** exakt eingestellt werden, damit eine einwandfreie Banknotenübergabe vom Banknotenspeicher **35** zur Banknotenein-/ausgabeeinheit **10** erfolgen kann. Zur Höheneinstellung der Halteeinheit **17** werden vier zylinderförmige Montagebolzen **19** (es sind nur zwei in **Figur 2** sichtbar) bei aus der Tresorgrundeinheit **15** herausgezogenem Banknotenspeicher **35** verwendet. Die Montagebolzen **19** weisen einen verbreiterten Oberteil **20** auf. Sie werden mit ihrem dünnen Querschnitt zuerst durch eine Durchgangsbohrung **18a** in der Wandung **23** und einer Durchgangsbohrung **18b** in der Referenzplatte **24** gesteckt. Die Montagebolzen **19** ruhen nun auf ihrem Übergang vom dünnen Querschnitt zum dickeren Oberteil **20** auf dem Bohrlochrand der Referenzplatte **24**. Über jeden Oberteil **20** wird nun eine Distanzhülse **26** gesteckt. Die Höhe der Distanzhülse **26** ist ein Maß für den Abstand der Halteeinheit **17** von der Tresorwandung **23** d. h. von der Referenzplatte **24**. An den mit der Bezugszahl **25** bezeichneten Stellen sind auf der Wandung **23** nicht dargestellte Gewindebolzen angeordnet. Es werden insgesamt vier Gewindebolzen verwendet. Auf diesen Gewindebolzen wird nun eine ebenfalls nicht dargestellte erste Mutter aufgeschraubt. Nun wird die Halteeinheit **17** auf die Montagebolzen **19** gesetzt. Sie ruht nun auf der oberen Stirnseite der Distanzhülsen **26**. Die ersten Muttern auf den Gewindebolzen an der Stelle mit der Bezugszahl **25** werden von der Seite des Kassentresors **1** aus mit einem Steckschlüssel soweit nach oben geschraubt bis der Boden der Halteeinheit **17** gerade auf ihnen aufliegt, ohne von der oberen Stirnseite der Distanzhülsen **26** abzuheben. Anschließend wird die Halteeinheit **17** wieder abgenommen, die Montagebolzen **19** mit aufgesteckter Distanzhülse **26** entnommen und die Halteeinheit **17** wieder auf die ersten Muttern auf den Gewindebolzen an den Stellen **25** aufgesetzt. Eine an den Stellen **25** in **Figur 2** dargestellte zweite Mutter wird auf die Gewindebolzen aufgeschraubt und gegen die erste verspannt. Die Halteeinheit **17** ist nun in richtiger horizontaler und vertikaler Lage zur Tresorgrundeinheit **15** montiert. Die richtige horizontale Lage ergibt sich durch die Position von für die Gewindebolzen in Boden der Halteeinheit **17** bestimmten (nicht dargestellten) Durchgangsbohrungen. Die Position der aufsteckbaren Banknotenein-/ausgabeeinheit **10** zur Halteeinheit **17** wird über drei Paßstifte **21** festgelegt, von denen nur zwei in **Figur 2** dargestellt sind. Nach der Entnahme der Montagebolzen **19** kann auch der Banknotenspeicher **35** wieder eingefahren werden, da diese nicht mehr in dessen Freiraum anwesend sind.

Der Verkleidungsteil **9** ist an den Abdeckblechen der Banknotenein-/ausgabeeinheit **10** in einer nicht dargestellten Weise angeklemmt und kann nach oben abgezogen werden. Die Abdeckbleche des Verkleidungsteils **9** und der Banknotenein-/aüsgabeeinheit **10** liegen in einer in **Figur 1** angedeuteten Fuge **27** aneinander an.

Eine schematische Querschnittsdarstellung durch den gesamten Kassentresor **1** ist in **Figur 3** dargestellt. Aus dem in der Tresorgrundeinheit **15** angeordneten Banknotenspeicher **35** werden die Banknoten mit einer Fördereinrichtung **36** zur Banknotenein-/ausgabeeinheit **10** nach oben transportiert und dort von einem Ablagerad **37** in der Ausgabeeinheit **11** unter Bildung des Bündels **12** abgelegt. Banknoten, welche in eine Eingabeeinheit **39** in der Banknotenein-/ausgabeeinheit **10** eingegeben werden, werden, wenn sie fehlerhaft sind, nach Prüfung durch eine (nicht dargestellte) Prüfeinheit zur Ausgabeeinheit **11** transportiert oder falls sie fehlerfrei sind, mit der Fördereinrichtung **36** im Banknotenspeicher **35** abgelegt. Ein Banknotenspeicher dieser Art mit den dazugehörenden Fördereinrichtungen ist z. B. in der EP-A 0 290 731 beschrieben.

Die Wegewahl der Banknoten erfolgt mit einem in Figur **4** dargestellten Wegewahlelement **41**. Das Wegewahlelement **41** ist ein um seine Längsachse **43** mit einem (nicht dargestellten) Antrieb drehbarer Kreiszylinder. Der Kreiszylinder ist von zwei axial verlaufenden Längsschlitzen **45a** und **45b** durchzogen. Die Längsschlitze **45a** und **45b** durchtrennen den Kreiszylinder unter Bildung von drei Zylinderlängsteilstücken **47a, 47b** und **47c**, welche in nicht dargestellter Weise jeweils am Zylinderboden und/oder - kopf mechanisch zusammengehalten sind.

Die beiden Längsschlitze **45a** und **45b** sind an einer Stelle des Zylindermantels unter Bildung eines geschwungenen V's zusammengeführt. Die Enden der V-Schenkel der Längsschlitze **45a** und **45b** sind im Querschnitt trichterförmig erweitert, um einen guten Einlauf der Banknoten zu gewährleisten.

In **Figur 4** befindet sich das Wegewahlelement **41** in einer Stellung, in der Banknoten, kommend von der Eingabeeinheit **39** - angedeutet durch einen Pfeil mit der Bezugszahl **39** - geführt von den Führungsrollen **49a** und **49b** und zusätzlich geleitet durch Einlaufshilfselemente **51a** und **51b**, in den Längsschlitz **45a** eingeführt werden und diesen dann in Richtung Ausgabeeinheit **11** verlassen. Die Führung zur Ausgabeeinheit **11** erfolgt über trichterförmig angeordnete Leitbleche **53a** und **53b** und einen Bandförderer, wobei nur dessen Rollen **55a** und **55b** dargestellt sind. Die Banknoten werden von der Eingabeeinheit **39** wieder zur Ausgabeeinheit **11** transportiert, wenn die Banknoten von einer nicht dargestellten Prüfeinheit als nicht der Norm entsprechend beurteilt werden. Auf die lineare Förderung der Banknoten wird nicht weiter eingegangen, da lineare Banknotenförderungen bekannt sind.

Aus dem Banknotenspeicher **35** werden die Banknoten mit einer nicht näher beschriebenen Bandfördereinrichtung **36** durch den Schlitz **22** in der oberen Tresorwand der Tresorgrundeinheit **15** und durch den Längsschlitz **45b** im Wegwahlelement **41** hindurch ebenfalls zur Ausgabeeinheit **11** transportiert.

Sollen die Banknoten von der Eingabeeinheit **39** in den Banknotenspeicher **35** transportiert werden, so wird das Wegewahlelement **41** derart geschwenkt, daß die trichterförmige Öffnung des Längsschlitzes **45b** von der Eingabeeinheit 39 kommende Banknoten aufnehmen kann.

Der Vorteil des kompakt als Kreiszylinder ausgebildeten Wegewahlelements **41** liegt in seiner einfachen Gestaltung und damit Störunempfindlichkeit gegenüber Wegewahlelementen, welche aus einer Vielzahl von als Weichen ausgebildeten Umlenkblechen zusammengesetzt sind. Das Wegewahlelement 41 kann als "Dreiwegeventil" für blattförmiges Gut bezeichnet werden. Dieses Wegewahlelement **41** kann nicht nur bei der Auswahl von Förderwegen bei Banknoten eingesetzt werden, es läßt sich auch bei anderem blattförmigen Gut zur Auswahl verschiedener Transportwege einsetzen. Es kann überall dort verwendet werden, wo schnelle Sortieranweisungen befolgt werden müssen. Die Schnelligkeit des Umschaltens richtet sich nur nach dem Trägheitsmoment des Wegewahlelements, welches sich u. a. durch die Wahl des Gewichts (insbesondere durch die Wahl des verwendeten Materials) und dem Zylinderdurchmesser beeinflussen läßt. Der verwendete Durchmesser hängt einerseits von der Steifigkeit des Materials ab - steife Blattmaterialien benötigen einen größeren Durchmesser - und andererseits von der Anzahl Verzweigungspunkte. Anstelle von zwei Längsschlitzen kann nur ein einziger oder auch mehrere verwendet werden. Auch können die Zylinderlängsteilstücke hohl sein. Es kann auch nur ein "Gerippe" der Führungen **45a** und **45b** verwendet werden.

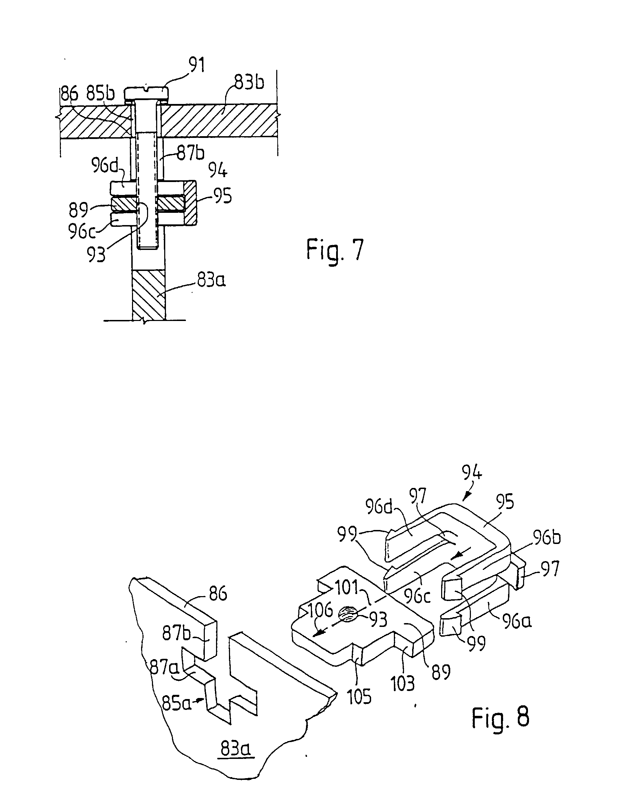

Der Banknotenspeicher **35** ist in **Figur 3** und **Figur 6** innerhalb des Kassentresors **1** und in **Figur 5** in einer schematischen Seitenansicht außerhalb des Kassentresors **1** dargestellt. Der Banknotenspeicher **35** hat drei Laufräder **59**, mit denen er außerhalb des Kassentresors **1** auf dem Boden **60** verschiebbar ist. Von den drei Laufrädern **59** ist eines um eine horizontale Achse schwenkbar, wie in **Figur 5** angedeutet. Auf der linken Seite des Banknotenspeichers **35** in **Figur 5** ist das schwenkbare Laufrad einmal in der Ausschiebe- und einmal in der Einschiebepostion dargestellt. Es handelt sich hier somit nicht um zwei, sonderen lediglich um ein einziges vorderes Laufrad **59**. Der Banknotenspeicher **35** hat ferner zwei mit einer Führungsrille **61** versehene Führungsräder **62b** und zwei flache Laufrollen **62a**. Die Laufrollen **62a** und die Führungsräder **62b** laufen auf Führungsschienen **63** um den Kassentresor **1** zielgenau auf eine "schwimmende" elektrische Kontaktkupplung **65** hinschieben zu können. Die Lagefixierung des Banknotenspeichers **35** innerhalb des Kassentresors **1** erfolgt mit einer Verriegelungsklinke **67**, welche in ein entsprechendes im Innenraum der Tresorgrundeinheit **15** angeordnetes Gegenstück **69** einrastbar ist. Am Klinkenarm der Verriegelungsklinke **67** ist das eine Ende eines über eine Spannrolle **71** gespannten Seilzugs **73** befestigt. Das andere Ende des Seilzugs **73** greift an einer durch eine Feder **74** vorgespannten Schalteinheit **75** zum Ein- und Ausschalten der über die Kontaktkupplung **65** in den Banknotenspeicher **35** einspeisbaren Versorgungsspannung an. Wird der Klinkengriff **76** der Verriegelungsklinke **67** bei geöffneter Türe **77** der Tresorgrundeinheit **15** nach oben gezogen, erfolgt eine Stromlosschaltung und das Auftrennen von Signalleitungen. Der Banknotenspeicher **35** kann nun ohne Gefahr eines Kurzschlusses beim Entkoppeln der Kontaktkupplungselemente der Kontaktkupplung **65** ausgefahren werden. Störpulse auf den zu entkoppelnden Signalleitungen werden ebenfalls unterbunden.

Das Einfahren der Banknotenspeichereinheit **35** in die elektrische Kontaktkupplung **65** muß positionsgenau erfolgen. Hierzu dienen die Führungsschienen **63**, auf denen die Laufrollen **62a** und die Führungsräder **62b** rollen sowie ein an seinem freien Ende verjüngter Einlaufstift **79**. Da im Durchmesser unterschiedliche Lauf- und Führungsräder **59**, **62a** und **62b** verwendet werden, kann auch an den Laufrädern **63** klebender Schmutz, z. B. vom Boden **60** aufgenommener Kaugummi, keine Führungsungenauigkeiten bewirken.

Der Kassentresor **1** weist mehrere, nicht explizit dargestellte, zueinander senkrecht stehende Abdeck- bzw. Unterteilungsbleche **83a** und **83b** auf. Die Abdeckbleche **83a** und 83b müssen miteinander lösbar verbunden werden. Um auch hier Servicefreundlichkeit durch schnelle Lösbarkeit und erneute Fixierung zu ermöglichen, wurde die nachstehend beschriebene und in den **Figuren 7** und **8** dargestellte Verbindung erarbeitet.

Beide Bleche **83a** und **83b** weisen im Gegensatz zu den für diese Verbindung ansonsten üblichen verwendeten Bleche keine Abwinkelungen als Anschlußflansche auf. Die beiden Bleche **83a** und **83b** benötigen lediglich Ausstanzungen **85a** und **85b,** wobei die Ausstanzung **85b** auch als Bohrung ausgeführt werden kann. Die Ausstanzung **85a** setzt sich aus zwei schlitzförmigen, zueinander senkrecht stehenden Ausstanzungen **87a** und **87b** zusammen. Die Ausstanzung **87a** verläuft annähernd parallel zur Auflagekante **86** des Bleches **83a**, auf dem das Blech **85b** aufliegt. In diese Ausstanzung **87a** ist eine Halteplatte **89** als Halteelement teilweise einschiebbar. Die Ausstanzung **87b** mündet senkrecht in die Ausstanzung **87a** ein und ist zur Auflagekante **86** hin offen, damit eine durch die Ausstanzung **85b** steckbare Schraube **91** durch diese Ausstanzung **87b** hindurch in ein zum Schraubengewinde passendes Gewindeloch **93** als Kraftangriffselement in der Halteplatte **89** eingreifen kann. Damit Schraubenlänge und Blechstärken nicht besonders auf einander abgestimmt werden müssen, ist die Ausstanzung **87b** über die Ausstanzung **87a** hinausfortgesetzt worden. Das Schraubenende kann dann in die Fortsetzung einlaufen.

Damit die Halteplatte **89** während der Montage und Demontage der beiden Bleche **83a** und **83b** nicht gehalten werden muß, wird ein Clip **94** verwendet, der die Halteplatte **89** lösbar in der Ausstanzung **87a** hält. Der Clip **94** hat je zwei voneinander distanziert angeordnete, zueinander parallel liegende U-förmige Schenkel **96a** bis **96d** aus elastischem Material, insbesondere aus Kunststoff. Der Abstand zwischen den beiden Schenkeln **96a** und **96b** sowie **96c** und **96d** ist um eine Spieltoleranz größer als die Dicke der Halteplatte **89**. Der Clip **94** hat außen am Boden des U's links und rechts je eine Ausziehlasche **97**. Die Enden der U-Schenkel **96a** bis **96d** tragen Rastelemente **99**. Wird die Halteplatte **89** in die Aussparung **85a** eingesetzt, liegt sie in der Ausstanzung **87a** und die Schenkel **96a** bis **96d** des Clips **94** greifen durch die Ausstanzung **87b** und deren Verlängerung. Die Rastelemente **99a** bis **99d** rasten auf der Oberseite des Bleches **83a** ein. Zur Demontage der in die Ausstanzung **87a** eingesteckten Halteplatte **89** werden nur die Rastelement **99a** bis **99d** mit einer Flachzange nach innen gedrückt und der Clip **94** an seinen Ausziehlaschen **97** herausgezogen.

Wie in der **Figur 8** angedeutet, sind die Enden der Ausziehlaschen **97** gegen die Rastelemente **99** gebogen. Bei eingeschobener und mit dem Clip **94** gesicherter Halteplatte **89** sind die Enden der Ausziehlaschen **97** gegen die Oberfläche des Bleches **83a** gepreßt. Infolge der elastischen Spannkraft der Ausziehlaschen **97** werden die Rastelemente **99** gegen die andere Oberfläche des Bleches **83a** gezogen, wodurch Clip **94** und Halteplatte **89** in ihrer Lage spielfrei gehalten sind.

Die Halteplatte **89** ist zu ihrer Längsachse **101** spiegelsymmetrisch aufgebaut und wird durch je zwei Absätze **103** und **105** in Einschieberichtung **106** verschmälert. Die beiden Absätze **103** dienen als Anschläge an der Oberfläche des Bleches **83a**, damit die Halteplatte **89** durch die Ausstanzung **87a** nicht hindurchschiebbar ist. Die Absätze **105** ermöglichen ein Gegeneinanderbiegen der vier U-Schenkelenden mit einer Flachzange bei der Demontage der mit dem Clip **94** gesicherten Halteplatte **89**. Wären die beiden eine Breitenreduzierung verursachenden Absätze **105** nicht vorhanden, so würden die Backeninnenflächen an der Halteplatte **89** anstoßen und ein Gegeneinanderbiegen der Schenkel **96a** bis **96d** wäre nicht möglich.

Auf die Ausstanzung **87b** kann verzichtet werden, wenn die erzielbaren Verbindungskräfte gering sein dürfen. In diesem Fall wird dann ein L-förmiges Zugelement anstelle der Schraube **91** verwendet. Der vertikale Schenkel dieses Zugelements wird dann durch eine er Ausstanzung **85b** analoge Ausstanzung, welche jedoch mindestens um die halbe Blechstärke versetzt sein muß, gesteckt. Das L-förmige Zugelement weist dann an seinem vertikalen Schenkel ein Gewinde auf, auf das eine Mutter zur Herstellung der Verbindung aufgeschraubt wird.

Anstelle der Gewindebohrung **93** kann auch eine Durchgangsbohrung mit einem Schlitz vorgesehen werden, in welche anstelle der Schraube **91** ein federbelasteter Bajonettverschluß eingesetzt wird.

Der Kassentresor **1** ist über in **Figur 3** angedeutete Kabel mit den beiden Terminals **5a** und **5b**, mit einem nicht dargestellten Zentralrechner, Alarmeinrichtungen, der Stromversorgung, etc. verbunden. Die aus dem Kassentresor **1** herausgehenden Kabel **115** sind an der Innenwand der Tresorgrundeinheit **15** mit einem Befestigungsmittel **109** zu deren Zugentlastung befestigt.

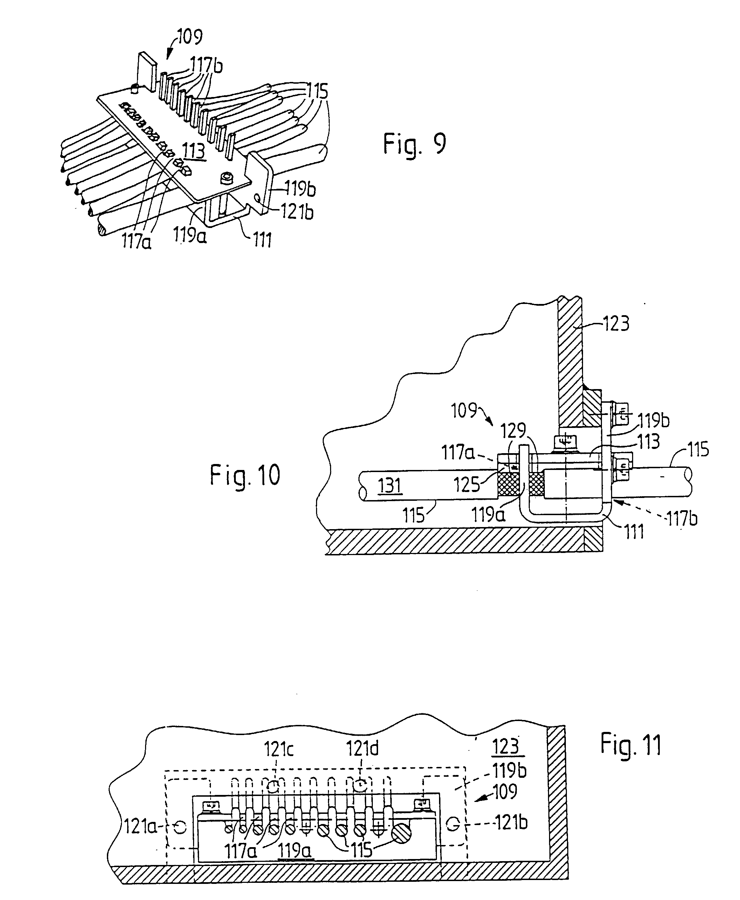

Das in den **Figuren 9** bis **11** dargestellte Befestigungsmittel **109** hat eine im Querschnitt U-förmig gebogene, rinnenartige Halteschiene **111**. Die U-förmige Rinne der Halteschiene **111** wird durch eine Andruckplatte **113** abgedeckt. Diese Andruckplatte **113** preßt die zu haltenden Kabel **115** in Aussparungen **117a** und **117b** in den Schenkeln **119a** und **119b** hinein. Die Abschirmungen **129** sind durch den Schenkel **119a** und die isolierenden Kabelmäntel **131** über der Abschirmung **129** durch den Schenkel **119b** gehalten. Ein Verrutschen des Kabelmantels **131** gegenüber der abisolierten Mantelstelle ist durch Zug von außen auf die Kabel ausgeschlossen. Eine Erdung der Abschirmung **129** kann über den Schenkel **119a** erfolgen.

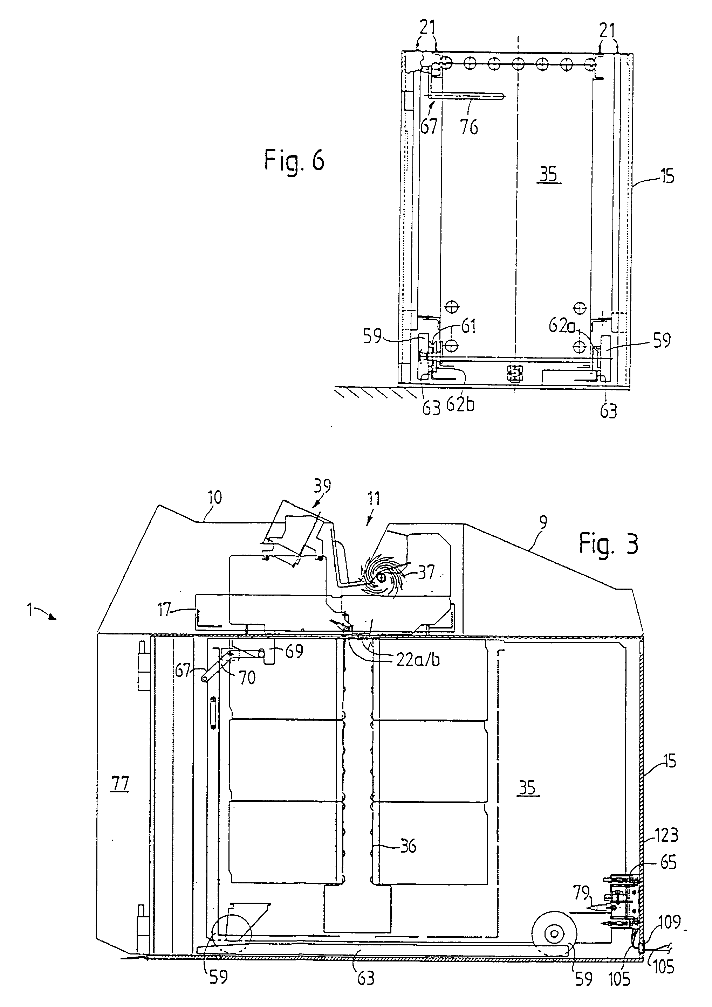

Der Schenkel **119b** ist gegenüber dem Schenkel **119a** sowohl seitlich wie auch in der Höhe verlängert. In diesen verlängerten Bereichen trägt er Durchgangsbohrungen **121a** bis **121d**, welche, wie in **Figur 10** dargestellt, für die Befestigung an der Tresorwand **123** vorgesehen sind. Unter der Andruckplatte **113** ist eine gummielastische Anpreßplatte **125** angeordnet, welche auf die Kabelmäntel im montierten Zustand drückt. Beide Schenkel **119a** und **119b** sind, wie in **Figur 11** dargestellt, kammartig geschlitzt. In den Zwischenräumen **117a** und **117b** liegen die Kabel **115**.

## Patentansprüche

1. Kassentresor **(1)** für beidseits agierende Kassierer **(4a, 4b)** mit einer Banknotenein-/ausgabeeinheit **(10)**, zu der jeweils nur einer der beiden Kassierer freien Zugriff hat, und einer in einer gepanzerten Tresorgrundeinheit **(15)** angeordneten Banknotenspeichereinheit **(35)**, dadurch gekennzeichnet, daß die Banknotenein-/ausgabeeinheit **(10)** als Ganzes unzerlegt von der Tresorgrundeinheit **(15)** abnehmbar ist und die Tresorgrundeinheit **(15)** in einer der abnehmbaren Banknotenein-/ausgabeeinheit **(10)** benachbarten Wandung lediglich wenigstens einen schmalen Durchbruch **(22, 22a/b)** zur Banknotenübergabe aus der in der Tresorgrundeinheit **(15)** angeordneten Banknotenspeichereinheit **(35)** zur Banknotenein-/ausgabeeinheit **(10)** aufweist, damit ein unbefugter Zugriff zu den Banknoten in der Banknotenspeichereinheit **(35)** bei abgenommener Banknotenein-/ausgabeeinheit **(10)** unmöglich ist.

2. Kassentresor **(1)** nach Anspruch 1, **dadurch gekennzeichnet,** daß die Banknotenein-/ausgabeeinheit **(10)** oben auf der Tresorgrundeinheit **(15)** zusammen mit einem ebenfalls abnehmbaren Verkleidungsteil **(9)** angeordnet ist, wobei letzterer **(9)** keine Funktionselemente enthält, lediglich zur Gestaltung des äußeren Erscheinungsbildes dient und abnehmbar ist, damit der Kassentresor **(1)** zur Platzersparnis unter einen Abschrankungstresen **(3)** in einer Bankschalterhalle schiebbar ist.

3. Kassentresor **(1)** nach Anspruch 1 oder 2, **dadurch gekennzeichnet**, daß die Banknotenspeichereinheit **(35)** unzerlegt als Ganzes aus der Tresorgrundeinheit **(15)** herausnehmbar, insbesondere herausfahrbar ist.

4. Kassentresor **(1)** nach Anspruch 3, **gekennzeichnet durch** ein entriegelbares mechanisches Verriegelungselement **(67, 69)** in der Tresorgrundeinheit **(15)** zur Lagefixierung der Banknotenspeichereinheit **(35)** und eine elektrische mit dem Verriegelungselement **(67, 69)** zusammenwirkende Schalteinheit **(75)**, um im entriegelten Zustand die Banknotenspeichereinheit **(35)** stromlos schalten zu können.

5. Kassentresor **(1)** nach Anspruch 4, **dadurch gekennzeichnet**, daß das Verriegelungselement als Verriegelungsklinke **(67)** ausgebildet ist und die Schalteinheit **(75)** mit der Verriegelungsklinke **(67)** über ein Kraftübertragungselement **(71, 73)** verbunden ist, welches die Klinkenbewegung auf die Schalteinheit **(75)** zum Ein- bzw. Ausschalten der Stromversorgung überträgt.

6. Kassentresor **(1)** nach Anspruch 4 oder 5, **dadurch gekennzeichnet**, daß die Banknotenspeichereinheit **(35)** auf Führungselementen **(62, 63)** in die Tresorgrundeinheit **(15)** einschiebbar ist und ein erstes elektrisches Kontaktkupplungselement **(65)** aufweist, welches parallel zur Einschieberichtung mit einem zweiten in der Tresorgrundeinheit **(15)** angeordneten Kontaktkupplungselement lösbar zusammenkuppelbar ist.

7. Kassentresor nach einem der Ansprüche 1 bis 6, **gekennzeichnet durch** eine Verbindung zum lösbaren Zusammenfügen eines ersten mit einem zweiten senkrecht stehenden Abdeck- bzw. Unterteilungsbleches **(83a, 83b)**, wobei die Stirnseite des ersten Bleches **(83a)** senkrecht auf einer der Blechoberf!ächen des anderen Bleches **(83b)** ansteht und beide Bleche **(83a, 83b)** am Verbindungsort lediglich nurAusstanzungen **(85a, 85b)** aufweisen.

8. Kassentresor nach Anspruch 7, **gekennzeichnet durch** eine im ersten Blech **(83a)** zu deren Auflagekante **(86)** am zweiten Blech **(83b)** annähernd parallel verlaufende, schlitzförmige erste Ausstanzung **(87a)**, ein Verbindungselement **(91)** mit einem in die erste Ausstanzung **(87a)** wenigstens teilweise einschiebbaren Halteelement **(89)** und einer zweiten Ausstanzung **(85b)** im zweiten Blech **(83b)** durch das das Verbindungselement **(91)** steckbar ist.

9. Kassentresor nach Anspruch 8, **dadurch gekennzeichnet**, daß das Halteelement **(89)** wenigstens einen Anschlag **(103)** aufweist, der um eine Toleranz breiter ist als die erste Ausstanzung **(87a)**, um ein vollständiges Durchstecken des Halteelements **(89)** durch die erste Ausstanzung **(87a)** zu verhindern.

10. Kassentresor nach Anspruch 8 oder 9, **gekennzeichnet durch** eine von der Auflagekante **(86)** des ersten Blechs **(83a)** für das zweite Blech **(83b)** in die erste Ausstanzung **(87a)** verlaufende Aussparung **(87b)**, durch die das Verbindungselement **(91)** in ein Kraftangriffselement **(93)** des eingesteckten Halteelements **(89)** eingreifen kann.

11. Kassentresor nach einem der Ansprüche 8 bis 10, **gekennzeichnet durch** einen Clip **(94)**, der über wenigstens eine Seite des Halteelements steckbar ist, um dieses in der ersten Ausstanzung **(87a)** gegen Herausrutschen zu sichern.

12. Kassentresor nach Anspruch 11, **dadurch gekennzeichnet**, daß das Verbindungselement eine Schraube **(91)** ist, die Aussparung **(87b)** um eine Spielpassung breiter ist als der Außenabstand der Schenkel **(96a/96c, 96b/96d)** des Clips **(94)** und senkrecht zu der dem zweiten Blech **(83b)** benachbarten Auflagekante **(86)** des ersten Blechs **(83a)** und die erste Ausstanzung **(87a)** annähernd parallel zu dieser Auflagekante **(86)** verläuft, das Halteelement **(89)** plattenförmig und das erste Kraftangriffselement im Halteelement **(89)** als Gewindebohrung **(93)** für die Schraube **(91)** ausgebildet sowie ein zweites Kraftangriffselement für die bei hergestellter Verbindung auf Zug belastete Schraube **(91)** der Schraubenkopf ist, der auf der dem ersten Blech **(83a)** abgewandten Blechoberfläche des zweiten Blechs **(83b)** auflegbar ist.

13. Kassentresor nach einem der Ansprüche 1 bis 12, **gekennzeichnet durch** ein Befestigungsmittel **(109)** zur Zugentlastung insbesondere von abgeschirmten Leitern **(115)** eines Kabelbündels, eine im Querschnitt U-förmig gebogene, rinnenartige Halteschiene **(111)** und eine diese **(111)** abdeckende Andruckplatte **(113)**, mit der die zugzuentlastenden Kabel **(115)** in einander gegenüberliegende Aussparungen **(117a, 117b)** in beiden U-Schenkeln **(119a, 119b)** der Halteschiene **(111)** preßbar sind, wobei dann in der einen Aussparung **(117b)** des einen Schenkels **(119b)** jeweils die Zugentlastung des Kabelmantels **(131)** und in der gegenüberliegenden Aussparung **(117a)** des anderen Schenkels **(119a)** die Zugentlastung der Abschirmung **(129)** erfolgt.

14. Kassentresor (1) nach Anspruch 13, **gekennzeichnet durch** eine gummielastische, an der Andruckplatte **(113)** angeordnete Anpreßplatte **(125)** zum direkten Anpressen gegen die Kabel **(115)**.

## Claims

1. Cashier's safe (1) for cashiers (4a, 4b) operating at both sides, having a banknote receiving/dispensing unit (10) to which only one of the two cashiers has free access at any one time, and a banknote storage unit (35) arranged in an armoured safe base unit (15), characterised in that the banknote receiving/dispensing unit (10) can be removed complete in a non-dismantled state from the safe base unit (15) and the safe base unit (15) has, in a wall adjacent to the removable banknote receiving/dispensing unit (10), merely at least one narrow opening (22, 22a/b) for banknote delivery from the banknote storage unit (35) arranged in the safe base unit (15) to the banknote receiving/dispensing unit (10) so that unauthorised access to the banknotes in the banknote storage unit (35) is not possible when the banknote receiving/dispensing unit (10) has been removed.

2. Cashier's safe (1) according to claim 1, characterised in that the banknote receiving/dispensing unit (10) is arranged at the top of the safe base unit (15) together with a similarly removable casing component (9), the casing component (9) containing no working elements and being used only for outer appearance and being removable, so that the cashier's safe (1) can be pushed under a partition counter (3) in a bank counter hall in order to save space.

3. Cashier's safe (1) according to claim 1 or 2, characterised in that the banknote storage unit (35) can be taken out in a complete non-dismantled state from the safe base unit (15), especially moved out.

4. Cashier's safe (1) according to claim 3, characterised by an unlockable mechanical locking element (67, 69) in the safe base unit (15) for fixing the position of the banknote storage unit (35), and an electrical switch unit (75) cooperable with the locking element (67, 69) in order to be able to connect up the banknote storage unit (35) without power, in the unlocked state.

5. Cashier's safe (1) according to claim 4, characterised in that the locking element is in the form of a locking catch (67) and the switch unit (75) is connected to the locking catch (67) by way of a force transmission element (71, 73) which transmits the catch movement to the switch unit (75) in order to switch the power supply on and off.

6. Cashier's safe (1) according to claim 4 or 5, characterised in that the banknote storage unit (35) can be pushed on guide elements (62, 63) into the safe base unit (15) and has a first electrical contact coupling element (65) which can be releasably coupled, parallel to the insertion direction, to a second contact coupling element arranged in the safe base unit (15).

7. Cashier's safe according to any one of claims 1 to 6, characterised by a connection for the releasable attachment of a first to a second perpendicularly arranged covering or dividing metal sheet (83a, 83b), the end face of the first metal sheet (83a) being arranged perpendicularly on one of the sheet surfaces of the other metal sheet (83b) and the two metal sheets (83a, 83b) having only punched-out portions (85a, 85b) at the place of connection.

8. Cashier's safe according to claim 7, characterised by a first, slot-shaped, punched-out portion (87a) extending in the first metal sheet (83a) approximately parallel to the first metal sheet's supporting edge (86) at the second metal sheet (83b), a connecting element (91) having a holding element (89) which is at least partially insertable into the first punched-out portion (87a), and a second punched-out portion (85b) in the second metal sheet (83b) through which the connecting element (91) can be inserted.

9. Cashier's safe according to claim 8, characterised in that the holding element (89) has at least one stop (103) which is wider by a tolerance than the first punched-out portion (87a) in order to prevent the holding element (89) from being pushed completely through the first punched-out portion (87a).

10. Cashier's safe according to claim 8 or 9, characterised by a recess (87b) which extends from the supporting edge (86) of the first metal sheet (83a) for the second metal sheet (83b) into the first punched-out portion (87a) and through which the connecting element (91) can engage in a force application element (93) of the inserted holding element (89).

11. Cashier's safe according to any one of claims 8 to 10, characterised by a clip (94) which can be slipped over at least one side of the holding element in order to secure the holding element against sliding out of the first punched-out portion (87a).

12. Cashier's safe according to claim 11, characterised in that the connecting element is a screw (91), the recess (87b) is wider by a clearance than the outside spacing of the limbs (96a/96c, 96b/96d) of the clip (94) and extends perpendicularly to the supporting edge (86), which is adjacent to the second metal sheet (83b), of the first metal sheet (83a) and the first punched-out portion (87a) extends approximately parallel to that supporting edge (86), the holding element (89) is plate-like and the first force application element in the holding element (89) is in the form of a threaded bore (93) for the screw (91), and a second force application element for the screw (91), which is under a tensile force when the connection has been produced, is the screw head which can be applied to that sheet surface of the second metal sheet (83b) which is remote from the first metal sheet (83a).

13. Cashier's safe according to any one of claims 1 to 12, characterised by a fastening means (109) for the strain relief especially of shielded conductors (115) of a cable bundle, a channel-like holding rail (111) which is a U-shaped bend in cross-section and a press plate (113) which covers the rail (111) and by means of which the cables (115) which are to be strain-relieved can be pressed into mutually opposing recesses (117a, 117b) in the two U limbs (119a, 119b) of the holding rail (111), strain relief of the cable sheath (131) then taking place in the one recess (117b) of the one limb (119b) and strain relief of the shield (129) taking place in the opposite recess (117a) of the other limb (119a).

14. Cashier's safe (1) according to claim 13, characterised by a rubber-elastic contact plate (125) which is arranged on the press plate (113) and which is intended for direct contact with the cables (115).

## Revendications

1. Guichet (1) pour caissiers (4a, 4b) opérant de part et d'autre, comprenant une unité (10) de réception/distribution de billets de banque à laquelle, à chaque fois, uniquement l'un des deux caissiers a libre accès, et une unité (35) de stockage de billets de banque, logée dans une unité de base blindée (15) du guichet, caractérisé par le fait que l'unité (10) de réception/distribution des billets peut être enlevée d'un seul tenant de l'unité de base (15) du guichet, à l'état non dissocié, et ladite unité de base (15) du guichet présente uniquement, dans une paroi voisine de l'unité amovible (10) de réception/distribution des billets, au moins une étroite perforation (22, 22a/b) pour le transfert de billets vers l'unité (10) de réception/distribution des billets, à partir de l'unité (35) de stockage des billets qui est logée dans l'unité de base (15) du guichet, de telle sorte qu'un accès non autorisé aux billets de banque, dans ladite unité (35) de stockage des billets, soit impossible lorsque ladite unité (10) de réception/distribution des billets est enlevée.

2. Guichet (1) selon la revendication 1, caractérisé par le fait que l'unité (10) de réception/distribution de billets de banque est disposée en partie haute sur l'unité de base (15) du guichet, conjointement à une partie d'habillage (9) semblablement amovible, cette dernière (9) ne renfermant pas d'éléments fonctionnels, servant uniquement à l'agencement de l'aspect extérieur, et étant amovible de façon que le guichet (1) puisse être inséré, pour économiser la place, au-dessous d'un comptoir de compartimentage (3) dans un local d'opérations bancaires.

3. Guichet (1) selon la revendication 1 ou 2, caractérisé par le fait que l'unité (35) de stockage de billets de banque peut être extraite, notamment déplacée d'un seul tenant hors de l'unité de base (15) du guichet, à l'état non dissocié.

4. Guichet (1) selon la revendication 3, caractérisé par un élément de verrouillage (67, 69) mécanique et déverrouillable, dans l'unité de base (15) du guichet, en vue de la consignation à demeure de l'unité (35) de stockage de billets de banque ; et par une unité de commutation électrique (75) coopérant avec ledit élément de verrouillage (67, 69) pour pouvoir commuter ladite unité (35) de stockage des billets, sans courant, à l'état déverrouillé.

5. Guichet (1) selon la revendication 4, caractérisé par le fait que l'élément de verrouillage est réalisé sous la forme d'un cliquet de verrouillage (67), et l'unité de commutation (75) est reliée audit cliquet de verrouillage (67) par l'intermédiaire d'un élément (71, 73) de transmission de forces qui transmet le mouvement dudit cliquet, à ladite unité de commutation (75), pour assurer respectivement l'enclenchement ou le déclenchement de l'alimentation en courant.

6. Guichet (1) selon la revendication 4 ou 5, caractérisé par le fait que l'unité (35) de stockage de billets de banque peut être insérée dans l'unité de base (15) du guichet, sur des éléments de guidage (62, 63), et comporte un premier élément (65) de couplage électrique de contacts qui peut être accouplé amoviblement, parallèlement à la direction de l'insertion, avec un second élément de couplage de contacts logé dans ladite unité de base (15) du guichet.

7. Guichet selon l'une des revendications 1 à 6, caractérisé par une solidarisation en vue de l'assemblage libérable entre une première et une seconde tôle perpendiculaire de recouvrement ou de subdivision (83a, 83b), la face extrême de la première tôle (83a) se dressant verticalement sur l'une des surfaces de l'autre tôle (83b), et les deux tôles (83a, 83b) présentant uniquement des découpes poinçonnées (85a, 85b) au point de solidarisation.

8. Guichet selon la revendication 7, caractérisé par une première découpe poinçonnée (87a) en forme de fente s'étendant, dans la première tôle (83a), à peu prés parallèlement au bord d'appui (86) de cette dernière sur la seconde tôle (83b) ; par un élément de liaison (91) muni d'un élément de retenue (89) pouvant être inséré, au moins partiellement, dans ladite première découpe poinçonnée (87a) ; et par une seconde découpe poinçonnée (85b) dans la seconde tôle (83b), à travers laquelle l'élément de liaison (91) peut être emboîté.

9. Guichet selon la revendication 8, caractérisé par le fait que l'élément de retenue (89) présente au moins une butée (103) plus large que la première découpe poinçonnée (87a), d'une certaine tolérance, afin d'empêcher un emboîtement intégral dudit élément de retenue (89) à travers ladite première découpe poinçonnée (87a).

10. Guichet selon la revendication 8 ou 9, caractérisé par une échancrure (87b) qui pénètre dans la première découpe poinçonnée (87a) à partir du bord d'appui (86) de la première tôle (83a) affecté à la seconde tôle (83b), et à travers laquelle l'élément de liaison (91) peut s'engager dans un élément (93) d'application de force de l'élément de retenue (89) emboîté.

11. Guichet selon l'une des revendications 8 à 10, caractérisé par une agrafe élastique (94) pouvant être emboîtée sur au moins un côté de l'élément de retenue, afin d'interdire un ripage de ce dernier dans la première découpe poinçonnée (87a).

12. Guichet selon la revendication 11, caractérisé par le fait que l'élément de liaison est une vis (91) ; l'échancrure (87b) est plus large, d'un certain jeu, que l'espacement extérieur entre les branches (96a/96c, 96b/96d) de l'agrafe élastique (94), et s'étend perpendiculairement au bord d'appui (86) de la première tôle (83a) qui est voisin de la seconde tôle (83b) ; la première découpe poinçonnée (87a) s'étend à peu près parallèlement à ce bord d'appui (86) ; l'élément de retenue (89) revêt la forme d'une plaque ; le premier élément d'application de force, dans l'élément de retenue (89), est réalisé sous la forme d'un trou taraudé (93) destiné à la vis (91) ; et un second élément d'application de force, affecté à la vis (91) subissant une contrainte de traction lorsque la solidarisation est établie, est la tête de ladite vis pouvant être appliquée sur la surface de la seconde tôle (83b) qui est tournée à l'opposé de la première tôle (83a).

13. Guichet selon l'une des revendications 1 à 12, caractérisé par un moyen de fixation (109) pour assurer, en particulier, le soulagement en traction de conducteurs blindés (115) d'un faisceau de câblage ; et par un rail de retenue (111) en forme de rigole, coudé en U en coupe transversale, et par une plaque de pression (113) qui recouvre ledit rail (111) et par laquelle les câbles (115), devant être soulagés en traction, peuvent être pressés dans des échancrures (117a, 117b) mutuellement opposées, dans les deux branches (119a, 119b) du U dudit rail de retenue (111), le soulagement en traction de la gaine de câblage (131) ayant lieu dans l'une (117b) des échancrures de l'une (119b) des branches, et le soulagement en traction du blindage (129) ayant lieu dans l'échancrure opposée (117a) de l'autre branche (119a).

14. Guichet (1) selon la revendication 13, caractérisé par une plaque de compression (125) douée de l'élasticité du caoutchouc, disposée sur la plaque de pression (113) pour exercer une compression directe sur les câbles (115).
